# EUROPEAN PATENT APPLICATION

(11) **EP 4 692 965 A1**
(43) Date of publication of application: **11.02.2026**
(21) Application number: 24779619.6
(22) Date of filing: 18.03.2024
(51) Int. Cl.: G05B 19/4093, B23K 26/38, B23Q 15/00, B23Q 17/00, G06Q 50/04

(54) **LEFTOVER-MATERIAL MANAGEMENT METHOD AND LEFTOVER-MATERIAL MANAGEMENT DEVICE**

(30) Priority: 31.03.2023 JP 2023058322
(71) Applicant: Amada Co., Ltd., Isehara-shi, Kanagawa 259-1196 (JP)
(72) Inventor: DOI, Hikotada, Isehara-shi, Kanagawa 259-1196 (JP)
(74) Representative: Grünecker Patent- und Rechtsanwälte PartG mbB
(86) International application number: PCT/JP2024/010403
(87) International publication number: WO 2024/203494

(57) **Abstract**

An offcut management device (21) includes a nesting determination unit (21a) for determining nesting by laying out the product to the material; a cutting region setting unit (21b) for setting a cutting line for cutting a region in which the product is laid out and a region in which the product is not laid out, to the material based on the nesting determined by the nesting determination unit (21a), and dividing the material into a plurality of cutting regions by the cutting line; an identification mark setting unit (21c) for arranging an identification mark on the material so as not to arrange the identification mark on the cutting region in which the product is not laid out; and an offcut registration unit (21d) for registering the cutting region in which the product is not laid out as the offcut.

## Description

### [TECHNICAL FIELD]

This disclosure relates to an offcut management method, and an offcut management device.

### [BACKGROUND ART]

Patent Literature 1 describes, for example, a method of inputting offcut names of offcuts generated by machining into an NC device, associating the offcut names with characteristics such as plate thickness, material, and shape of the offcuts and storing them in a memory to manage them. Patent Literature 1 also discloses a method of marking offcut names on the offcuts.

### [Citation List]

### [Patent Literature]

[Patent Literature 1] Japanese Unexamined Patent Application Publication No. 2003-122417

### [SUMMARY OF INVENTION]

In some cases, however, new offcuts generated from the material can be reused after marking a name or the like on a material. If the new offcuts are marked in the same manner as the original material, a new marking and a marking on the original material are displayed in a duplicated manner, resulting in a problem that an operator is confused and inconvenience is caused when the offcuts are reused.

One aspect of the present disclosure is an offcut management method for managing an offcut generated when a product is processed from a material, including: determining nesting by laying out the product to the material; setting a cutting line for cutting a region in which the product is laid out and a region in which the product is not laid out, to the material based on the nesting, and dividing the material into a plurality of cutting regions by the cutting line; arranging an identification mark on the material so as not to arrange the identification mark on the cutting region in which the product is not laid out; and registering the cutting region in which the product is not laid out as the offcut.

Another aspect of the present disclosure is an offcut management device for managing an offcut generated when a product is processed from a material, including: a nesting determination unit configured to determine nesting by laying out the product to the material; a cutting region setting unit configured to set a cutting line for cutting a region in which the product is laid out and a region in which the product is not laid out, to the material based on the nesting determined by the nesting determination unit, and divide the material into a plurality of cutting regions by the cutting line; an identification mark setting unit configured to arrange an identification mark on the material so as not to arrange the identification mark on the cutting region in which the product is not laid out; and an offcut registration unit configured to register the cutting region in which the product is not laid out as the offcut.

In an offcut management method and an offcut management device according to an aspect of the present disclosure, an identification mark is arranged on a material so as not to arrange the identification mark on a cutting region in which a product is not laid out. As a result, the newly marked identification mark and the identification mark marked on the original material are not displayed in a duplicated manner, so that inconvenience caused when offcuts are reused can be presented.

According to an aspect of the present disclosure, inconvenience caused when offcuts are reused can be prevented.

### [BRIEF DESCRIPTION OF DRAWINGS]

[FIG. 1] FIG. 1 is a block diagram illustrating a configuration of an offcut management system for realizing an offcut management method according to the present embodiment.
[FIG. 2] FIG. 2 is a diagram explaining a product and an offcut cut from a material.
[FIG. 3] FIG. 3 is a diagram illustrating an example of a selection screen for selecting an arrangement position of an identification mark by an offcut management device according to this embodiment.
[FIG. 4] FIG. 4 is a diagram illustrating an example of a material in which a product is laid out by the offcut management device according to this embodiment.
[FIG. 5] FIG. 5 is a diagram illustrating an example of a material on which a cutting line is set by the offcut management device according to this embodiment.
[FIG. 6] FIG. 6 is a diagram illustrating an example of a material on which an identification mark is arranged by the offcut management device according to this embodiment.
[FIG. 7] FIG. 7 is a diagram illustrating an example of a material from which an identification mark is deleted by the offcut management device according to this embodiment.
[FIG. 8] FIG. 8 is a diagram explaining the reason for deleting an identification mark by the offcut management device according to this embodiment.
[FIG. 9] FIG. 9 is a diagram illustrating an example of a skeleton material.
[FIG. 10] FIG. 10 is a flowchart illustrating a processing procedure of the offcut management processing by the offcut management device according to the present embodiment.

### [DESCRIPTION OF EMBODIMENTS]

### [Offcut Management System]

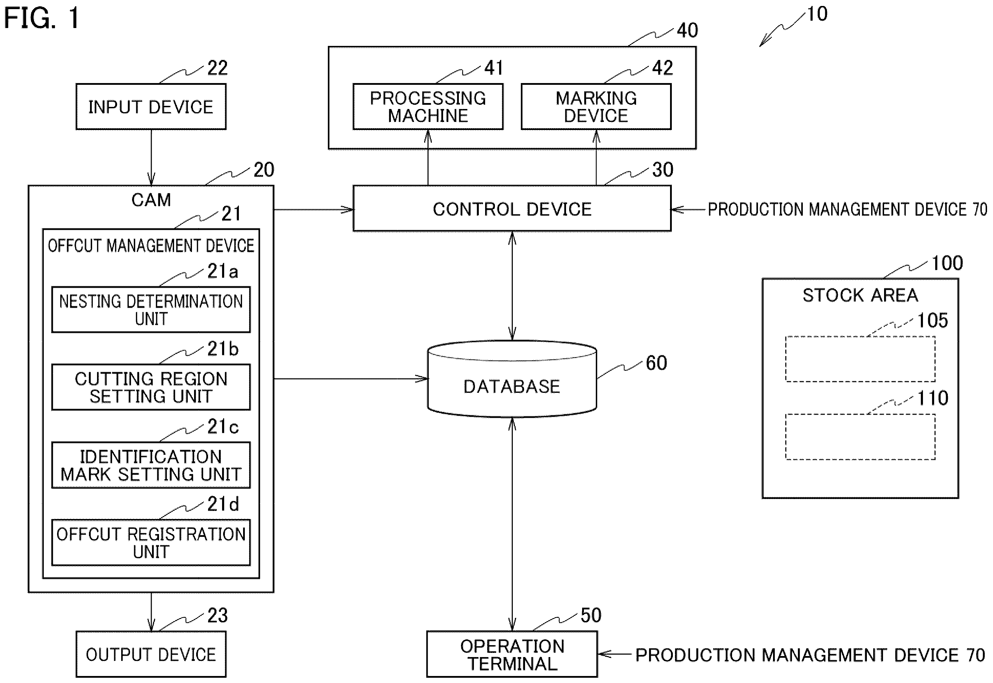

An offcut management system for realizing an offcut management method according to this embodiment will be described below with reference to the drawings. FIG. 1 is a block diagram schematically illustrating a configuration of an offcut management system including an offcut management device according to this embodiment. As illustrated in FIG. 1, an offcut management system 10 according to this embodiment mainly includes a CAM (Computer Aided Manufacturing) 20, a control device 30, a processing unit 40, an operation terminal 50, a database 60, and a production management device 70.

The offcut management method according to the present embodiment is an offcut management method for managing an offcut generated when a product is processed from a material, including: determining nesting by laying out the product to the material; setting a cutting line for cutting a region in which the product is laid out and a region in which the product is not laid out, to the material based on the nesting, and dividing the material into a plurality of cutting regions by the cutting line; arranging an identification mark on the material so as not to arrange the identification mark on the cutting region in which the product is not laid out; and registering the cutting region in which the product is not laid out as the offcut.

The CAM 20 is configured by a computer having a hardware processor such as a CPU (Central Processing Unit), a memory, and various interfaces. The memory and various interfaces are connected to the hardware processor via a bus. By causing the hardware processor to execute programs stored in the memory, the CAM 20 functions as an offcut management device 21 that manages offcuts generated when a product is processed from a material. The CAM 20 also creates a processing program for a processing machine 41 to perform processing the material, and a program for a marking device 42 to mark a predetermined identification mark.

An input device 22 for inputting information to the CAM 20, and an output device 23 for displaying the information created by the CAM 20, are connected to the CAM 20. The input device 22 acquires information necessary for functioning the offcut management device 21 from an external device. The information acquired by the input device 22 includes product information including the shape and size of the product, and position information for marking. The output device 23 outputs the created processing program to the control device 30, and information necessary for offcut management to the database 60.

The control device 30 is a device for controlling the processing unit 40 based on the processing program, and includes, for example, an NC (numerical control) device. The control device 30 is configured by a computer having a hardware processor such as a CPU, a memory, and various interfaces. The memory and various interfaces are connected to the hardware processor via a bus. Various functions of the control device 30 are realized by executing programs stored in a memory by a hardware processor.

The processing unit 40 includes a processing machine 41 and a marking device 42. The processing machine 41 produces a product from a material by performing predetermined processing on a material. For example, the processing machine 41 is a laser processing machine which performs laser processing by irradiating a material with a laser beam, a punching machine which performs punching on a material by a mold including a punch and a die, or a combined machine of these machines.

The marking device 42 is a device which performs marking on a product processed by the processing machine 41, a material, or an offcut. The marking device 42 is, for example, an inkjet printer, and performs marking by printing. The marking device 42 may perform marking by a method other than printing, such as stamping or laser processing. When marking is performed by stamping or laser processing, the processing machine 41 may function as a marking device.

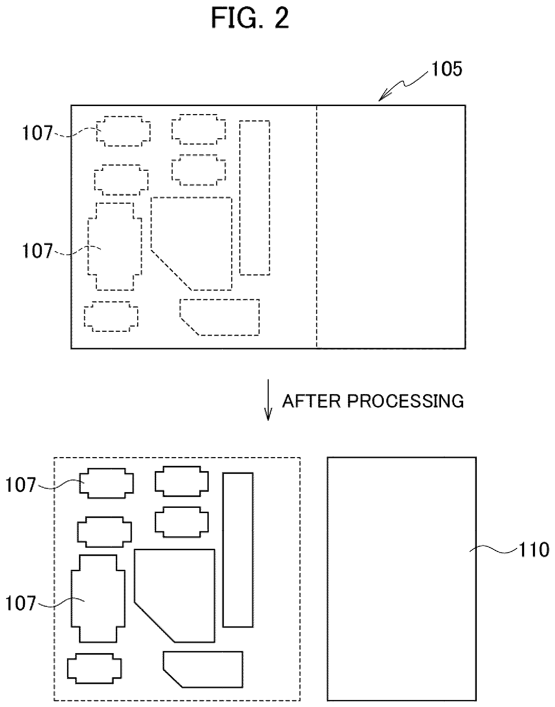

FIG. 2 is a diagram explaining a product and an offcut cut from a material. The control device 30 controls the processing machine 41 based on a processing program, and the processing machine 41 processes the material 105. Thus, the processing machine 41 cuts out a product 107 from the material 105. The processing machine 41 also cuts out a remaining region of the material 105 from which the product 107 is not cut out as an offcut 110.

The operation terminal 50 is, for example, a smartphone or a tablet terminal. The operation terminal 50 may be a general-purpose computer. The operation terminal 50 is configured by a computer having a hardware processor such as a CPU, a memory, and various interfaces. The memory and various interfaces are connected to the hardware processor via a bus. Various functions of the operation terminal 50 are realized by executing application programs stored in a memory.

The operation terminal 50 includes a display panel for displaying information, a touch panel for outputting signals corresponding to input operations, a communication interface for communicating with external devices such as the processing unit 40, the control device 30, the database 60, and the production management device 70. Further, the operation terminal 50 includes a reading unit, such as a camera, for reading marked identification marks.

The database 60 is a storage means for storing information required by the offcut management system 10. The database 60 includes a plurality of records prepared for each material and offcut. In each record, information including size, a plate thickness, a material, an origin, a marking position, processing conditions, and a storage location are registered in association with an ID. In addition, whether the material is a material such as a skeleton material after cutting a product is also registered. Further, the database 60 stores machine parameters preset by an operator.

The ID is an identifier for identifying a material or an offcut, and includes, for example, a character string. The size, plate thickness, and material are the size, plate thickness, and material of the material or offcut, respectively. An origin is a position indicating an origin of the material or offcut, and the marking position is a position of the identification mark to be marked on the material or offcut. The processing condition is a processing condition of the processing machine 41 when the material or offcut is processed. The storage location is a position of a stock area 100 in which the material or offcut is stored.

Types of materials which cannot be read by a reader even if the identification mark is marked are registered in the machine parameters. For example, when the identification mark is burned on the material by laser processing, and the material is dark color such as black, the reader may not be able to read the identification mark even if the identification mark is marked. Therefore, such types of materials are registered in advance as materials which cannot be read by the reader.

In addition, the setting of whether or not to arrange the identification mark at the four corners of the material and the setting of arranging the identification mark by selecting one or more corners from the four corners of the material are registered in the machine parameters. When the setting of arranging the identification mark at the four corners of the material is registered, the identification mark is automatically arranged at the four corners of the material. When the material is large at the work site and the identification mark is arranged at the four corners of the material, an operator can read the identification mark by moving to the four corners nearby, so the working time can be shortened.

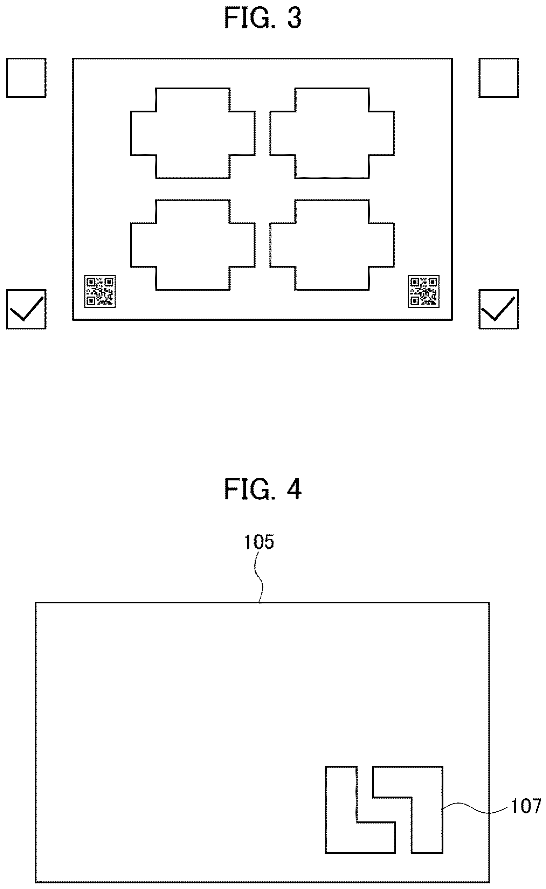

When the setting of arranging the identification mark by selecting the one or more corners from the four corners of the material is registered, a position to arrange the identification mark is selected in advance from the selection screen as illustrated in FIG. 3, and the identification mark is automatically arranged at a selected position. Some users may not need the identification mark at the four corners of the material. Then, there is no need to mark the identification mark at the four corners of the material, so that the working time can be shortened. In addition, the identification mark can be arranged at a position desired by a user.

The production management device 70 manages the operation of the processing machine 41 for efficiently producing the product. The production management device 70 holds information such as a list of products to be worked by the end of the day.

The stock area 100 is a storage location for storing the material 105 and the offcut 110, and the offcut 110 produced from the material 105 is stored in a predetermined storage location for future processing.

### [Offcut Management Device]

Next, a configuration of the offcut management device 21 according to this embodiment will be described. The offcut management device 21 manages an offcut generated when a product is processed from a material. As illustrated in FIG. 1, the offcut management device 21 includes a nesting determination unit 21a, a cutting region setting unit 21b, an identification mark setting unit 21c, and an offcut registration unit 21d. Note that the offcut management device 21 may be mounted on a control unit 30 or the operation terminal 50 instead of the CAM 20.

The nesting determination unit 21a acquires a material for laying out a product, lays out the product to the acquired material, and determines nesting. For example, as illustrated in FIG. 4, the nesting is determined by laying out the product 107 to the material 105.

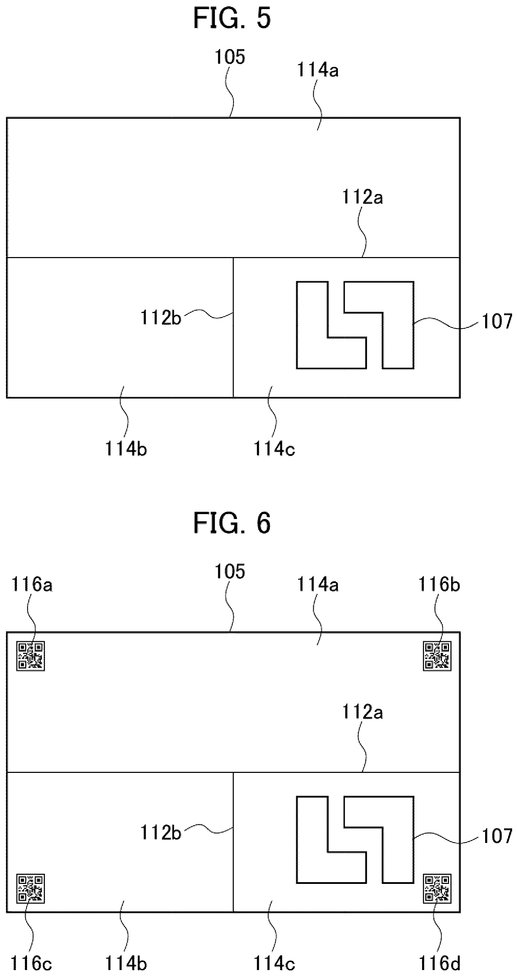

The cutting region setting unit 21b sets a cutting line for cutting a region in which the product is laid out and a region in which the product is not laid out, to the material based on the nesting determined by the nesting determination unit 21a, and divides the material into a plurality of cutting regions by the cutting line. For example, as illustrated in FIG. 5, the cutting region setting unit 21b sets two cutting lines 112a and 112b to the material 105, and divides the material 105 into three cutting regions 114a, 114b, and 114c. As a cutting method, a cutting method such as horizontal cutting, vertical cutting, and L-cutting may be adopted in addition to the T-cutting illustrated in FIG. 5.

The identification mark setting unit 21c arranges an identification mark on the material so as not to arrange the identification mark on the cutting region in which the product is not laid out. First, the identification mark setting unit 21c arranges the identification mark on the material at a predetermined position. The identification mark setting unit 21c accesses the database 60, and refers to the machine parameters. When the identification mark is set to be arranged on the four corners of the material, the identification marks 116a, 116b, 116c, and 116d are arranged on the four corners of the material 105 as illustrated in FIG. 6. In addition, when the machine parameters are set to arrange the identification mark by selecting one or more corners from the four corners of the material, the identification mark is arranged at a position selected on the selection screen illustrated in FIG. 3.

As illustrated in FIG. 6, two-dimensional codes readable by a camera or the like can be used for the identification marks 116a to 116d. The identification marks 116a to 116d are marks representing information for identifying the material 105, for example, an ID or a name of the material 105.

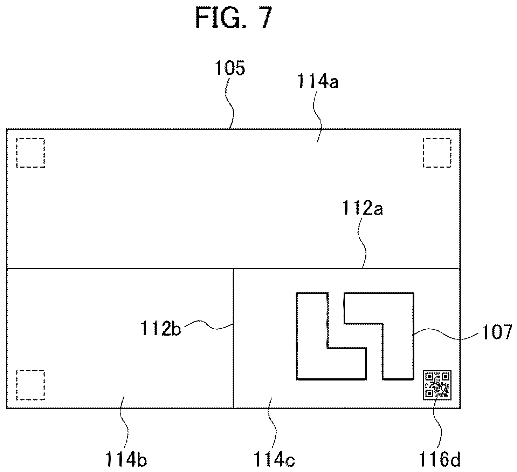

When the identification mark is arranged in a cutting region in which the product is not laid out, the identification mark setting unit 21c deletes the identification mark arranged in a cutting region in which the product is not laid out. For example, no product 107 is laid out to the cutting regions 114a and 114b in FIG. 6, so that the identification marks 116a to 116c arranged in the cutting regions 114a and 114b are deleted as illustrated in FIG. 7.

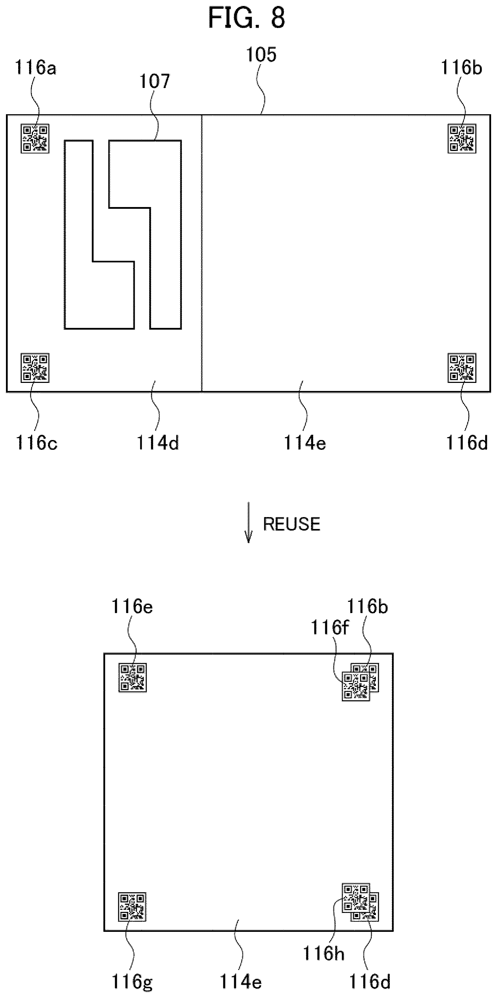

Here, the reason for deleting the identification mark will be explained. As illustrated in FIG. 8, the product 107 is laid out to the cutting region 114d of the material 105, and no product is laid out to the cutting region 114e. After that, when the product 107 is cut out, the cutting region 114e is reused as an offcut. However, if the identification marks 116a to 116d are marked on the cutting regions 114d and 114e, the identification marks 116b and 116d remain marked when the cutting region 114e is reused as an offcut. Therefore, if the new identification marks 116e to 116h are marked when the offcut generated from the cutting region 114e is reused, the old identification marks 116b and 116d and the new identification marks 116f and 116h are displayed in a duplicated manner.

Therefore, even if an operator tries to read the identification marks with a reader, the duplicated identification marks cannot be read with the reader. Moreover, if marking is done by offsetting the new identification marks from the old identification marks, the operator does not know which identification mark to be read. If an identification mark is arranged in a cutting region to be reused as an offcut, inconvenience occurs when the offcut is reused. Therefore, in the offcut management device 21 according to this embodiment, the identification marks are not arranged on a cutting region in which the product is not laid out by deleting the identification marks arranged on a cutting region in which the product is not laid out. Thus, the new identification marks and the old identification marks are not displayed in a duplicated manner, so that the inconvenience caused when the offcut is reused can be eliminated.

Furthermore, the identification mark setting unit 21c may arrange the identification mark only on the cutting region in which the product is laid out. As a result, the identification mark is not arranged on the cutting region in which the product is not laid out, so that a newly marked identification mark and the identification mark marked on the original material are not displayed in a duplicated manner, so that the inconvenience caused when the offcut is reused can be prevented.

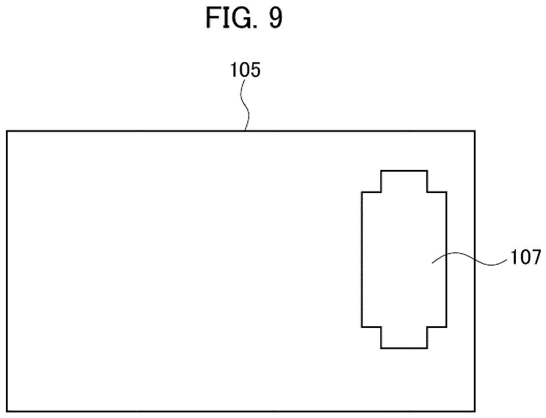

Furthermore, when the material is a material after a product is cut out, the identification mark setting unit 21c does not arrange the identification mark on the material. For example, as illustrated in FIG. 9, when the material 105 is a skeleton material after the product 107 is cut out and include holes, the entire material 105 is reused, and arrangement of the identification mark is stopped. As a result, even when the material 105 is reused as a whole as a skeleton material, the new identification mark and the old identification mark are not displayed in a duplicated manner, and the inconvenience caused when the material 105 is reused can be eliminated.

As a method of determining whether or not the material is a skeleton material, an operator may register it in the database 60 in advance, or the material may be determined to be a skeleton material when no cutting line is set.

Furthermore, the identification mark setting unit 21c does not arrange the identification mark on the material when the material is a type of material that cannot be read by a reader even if the identification mark is marked. Types of materials that cannot be read by a reader even if the identification mark is marked are registered in the machine parameters. Therefore, the identification mark setting unit 21c refers to the machine parameters in the database 60, and when the type of material of the material 105 is a material that cannot be read by a reader, cancels the arrangement of the identification mark.

The offcut registration unit 21d registers the cutting regions in which the product is not laid out as offcuts. For example, the cutting regions 114a and 114b illustrated in FIG. 7 are registered as offcuts in the database 60.

The offcut management device 21 is a controller composed of a general-purpose electronic circuit including a microcomputer, a microprocessor, and a CPU; and peripheral devices such as a memory. A computer program for executing processing for managing offcuts is installed in the offcut management device 21. Functions of the offcut management device 21 can be implemented by one or more processing circuits. The processing circuits may include programmed processing devices including, for example, electrical circuits, and may include devices such as application-specific integrated circuits (ASIC) or conventional circuit components arranged to perform the functions described in the embodiments.

### [Offcut Management Processing]

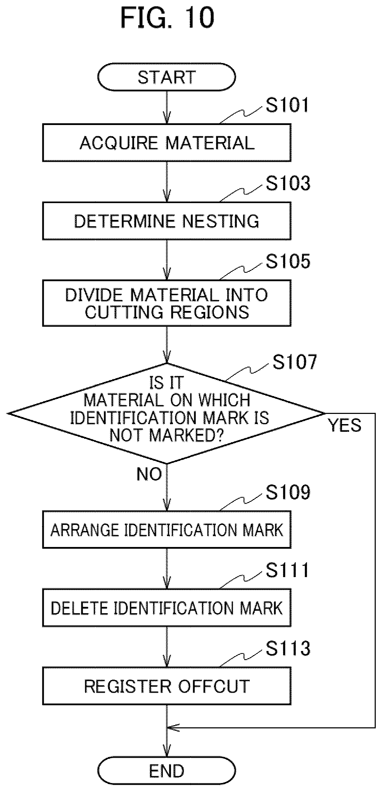

Next, the offcut management processing by the offcut management device 21 according to this embodiment will be described. FIG. 10 is a flowchart illustrating a processing procedure of the offcut management processing by the offcut management device 21.

As illustrated in FIG. 10, in step S101, the nesting determination unit 21a acquires a material for laying out products. The nesting determination unit 21a accesses the production management device 70, identifies a group of products to be worked on by the processing machine 41 and acquires a material to be worked on from the group of products to be worked on.

In step S103, the nesting determination unit 21a lays out products to the material acquired in step S101 and determines nesting. The nesting determination unit 21a extracts a product that conforms to the characteristics of the material, that is, the material, the plate thickness, and the size of the material, lays out the extracted product to the material and generates a candidate for layout. Then, in consideration of the delivery date and a usage rate of the product, an optimum candidate is selected from the candidates for layout, and the nesting is determined. However, an operator may operate the operation terminal 50, and select a layout from the layout candidates to determine the nesting. Thus, as illustrated in FIG. 4, the product 107 is laid out to the material 105, and nesting is determined.

In step S105, the cutting region setting unit 21b sets a cutting line for cutting a region in which the product is laid out and a region in which the product is not laid out, to the material based on the nesting determined in step S103, and divides the material into a plurality of cutting regions by the cutting line. For example, as illustrated in FIG. 5, the material 105 is divided into three cutting regions 114a to 114c by the two cutting lines 112a and 112b.

In step S107, the identification mark setting unit 21c determines whether the material acquired in step S101 is a material on which the identification mark is not marked. Specifically, the identification mark setting unit 21c refers to the machine parameters stored in the database 60, and determines whether the material acquired in step S101 is a type of material that cannot be read by a reader even if the identification mark is marked. When the material is a material that cannot be read by a reader, the offcut management processing according to this embodiment ends without arranging the identification mark. When the material is not a material that cannot be read by the reader, the process proceeds to step S109.

Further, the identification mark setting unit 21c refers to the machine parameters stored in the database 60, and determines whether or not the material acquired in step S101 is a material after the product is cut out, such as a skeleton material. When the material is a material after the product is cut out, the offcut management processing according to the present embodiment ends without arranging the identification mark. When the material is not a material after the product is cut out, the processing proceeds to step S109.

In step S109, the identification mark setting unit 21c arranges the identification mark at a predetermined position of the material. For example, when the identification mark is set to be arranged at four corners of the material, the identification marks 116a to 116d are arranged at four corners of the material 105 as illustrated in FIG. 6. Further, the identification mark setting unit 21c may arrange the identification mark only in a cutting region in which the product is laid out.

In step S111, the identification mark setting unit 21c deletes the identification mark arranged in a cutting region in which the product is not laid out when the identification mark is arranged in the cutting region in which the product is not laid out among the cutting regions divided in step S105. For example, as illustrated in FIG. 7, the product is not laid out to the cutting regions 114a and 114b, and the identification marks 116a to 116c are deleted. When the identification mark is arranged only in the cutting region in which the product is laid out, it is not necessary to delete the identification mark.

In step S113, the offcut registration unit 21d registers the cutting region in which the product is not laid out as an offcut in the database 60, and ends the offcut management processing according to the present embodiment. For example, the cutting regions 114a and 114b in FIG. 7 are registered as offcuts in the database 60, and the offcut management processing according to the present embodiment ends.

After that, the CAM 20 creates a machining program based on the nesting and the cutting region determined in the offcut management processing, the control device 30 controls the marking device 42 to mark the identification mark based on the machining program, and the processing machine 41 processes the product.

### [Effect of Embodiment]

As described above in detail, in the offcut management device 21 according to the present embodiment, the identification mark is arranged on the material so as not to arrange the identification mark on the cutting region in which the product is not laid out. As a result, when the cutting region in which the product is not laid out is reused as an offcut, the identification mark marked on the original material and the identification mark marked on the new offcut are not displayed in a duplicated manner. Therefore, the inconvenience caused when the offcut is reused can be prevented.

In addition, in the offcut management device 21 according to the present embodiment, the identification mark is arranged in the predetermined position of the material, and when the identification mark is arranged in a cutting region in which the product is not laid out, the identification mark arranged in the cutting region in which the product is not laid out is deleted. As a result, the identification mark is not arranged in the cutting region in which the product is not laid out, so that the inconvenience caused when the offcut is reused can be prevented.

Furthermore, in the offcut management device 21 according to the present embodiment, the identification mark is arranged in the cutting region in which the product is laid out. As a result, the identification mark is not arranged in the cutting region in which the product is not laid out, so that the inconvenience caused when the offcut is reused can be prevented.

Furthermore, in the offcut management device 21 according to the present embodiment, the identification mark is not arranged on the material when the material is a type of material that cannot be read by a reader even if the identification mark is marked. As a result, the situation in which the identification mark cannot be read by a reader can be prevented in advance, so that the inconvenience caused when the offcut is reused can be prevented.

Furthermore, in the offcut management device 21 according to the present embodiment, the identification marks are arranged at four corners of the material. As a result, even when the material is large at the work site, the worker can read the identification marks by moving to the four corners nearby, thereby shortening the working time.

Furthermore, in the offcut management device 21 according to the present embodiment, the identification marks are arranged in one or more corners selected from the four corners of the material. As a result, it is necessary to give the identification mark only at necessary corners from the four corners according to the user's desire, thereby shortening the working time for marking.

Furthermore, in the offcut management device 21 according to the present embodiment, the identification mark is not arranged on the material when the material is a material after cutting out the product. As a result, even when the material after cutting out the product is reused as a whole as the material, the identification marks are not displayed in a duplicated manner, thereby preventing the inconvenience caused when the material is reused.

Although the embodiments of the present disclosure have been described as above, the descriptions and drawings that form a part of the present disclosure should not be understood as limiting the invention. Various alternative embodiments, examples and techniques of operation will be apparent to those skilled in the art from this disclosure.

The present disclosure relates to the subject matter described in Japanese Patent Application No. 2023-058322 filed on March 31, 2023, the entire disclosure of which is incorporated herein by reference.

## Claims

1. An offcut management method for managing an offcut generated when a product is processed from a material, comprising:
determining nesting by laying out the product to the material;
setting a cutting line for cutting a region in which the product is laid out and a region in which the product is not laid out, to the material based on the nesting, and dividing the material into a plurality of cutting regions by the cutting line;
arranging an identification mark on the material so as not to arrange the identification mark on the cutting region in which the product is not laid out; and
registering the cutting region in which the product is not laid out as the offcut.

2. The offcut management method according to claim 1, further comprising:
arranging the identification mark at a predetermined position of the material, and deleting the identification mark arranged in the cutting region in which the product is not laid out when the identification mark is arranged in the cutting region in which the product is not laid out.

3. The offcut management method according to claim 1, wherein the identification mark is arranged in the cutting region in which the product is laid out.

4. The offcut management method according to any one of claims 1 to 3, wherein the identification mark is not arranged on the material when the material is a type of material that cannot be read by a reader even if the identification mark is marked.

5. The offcut management method according to claim 2, wherein the identification marks are arranged at four corners of the material.

6. The offcut management method according to claim 2, wherein the identification marks are arranged in one or more corners selected from four corners of the material.

7. The offcut management method according to any one of claims 1 to 3, wherein the identification mark is not arranged on the material when the material is a material after cutting out the product.

8. An offcut management device for managing an offcut generated when a product is processed from a material, comprising:
a nesting determination unit configured to determine nesting by laying out the product to the material;
a cutting region setting unit configured to set a cutting line for cutting a region in which the product is laid out and a region in which the product is not laid out, to the material based on the nesting determined by the nesting determination unit, and divide the material into a plurality of cutting regions by the cutting line;
an identification mark setting unit configured to arrange an identification mark on the material so as not to arrange the identification mark on the cutting region in which the product is not laid out; and
an offcut registration unit configured to register the cutting region in which the product is not laid out as the offcut.
